# EUROPÄISCHE PATENTANMELDUNG

(11) **EP 0 875 192 A1**
(43) Veröffentlichungstag der Anmeldung: **04.11.1998**
(21) Anmeldenummer: 98105996.7
(22) Anmeldetag: 02.04.1998
(51) Int. Cl.: A47J 45/08

(54) **Hohlgriff für Geschirre aus Metall mit einer wärmeisolierenden Einlage**

(30) Priorität: 02.04.1997 DE 29705773 U; 25.04.1997 DE 29707473 U
(71) Anmelder: HEINRICH BAUMGARTEN KG SPEZIALFABRIK FÜR BESCHLAGTEILE, 57290 Neunkirchen (DE)
(72) Erfinder: Baumgarten, Gert-Diethard, 57234 Wilnsdorf-Wilden (DE)
(74) Vertreter: Missling, Arne, Dipl.-Ing.

(57) **Zusammenfassung**

Hohlgriffe (1) aus Metall, wie Seiten-, Stiel- oder Deckel-griffe für Geschirre, bei denen der Hohlgriff aus einem umlaufenden, gefalzten, sich überlappenden oder stumpf gestoßenen Metallblech besteht und der Hohlgriff mit einer oder mehreren wärmeisolierenden Einlagen (5) versehen ist, werden, um zum einen eine sichere Handhabbarkeit auch bei Beschädigung der Einlage des Hohlgriffes zu gewährleisten und zum anderen die Hohlgriffe selbst bei Verlust der Einlage verletzungsfrei verwenden zu können, mit einer oder mehreren Einprägungen versehen, in welche die wärmeisolierenden Einlagen eingebettet sind.

## Beschreibung

Die Erfindung betrifft einen Hohlgriff aus Metall, wie Seiten-, Stiel-, oder Deckelgriff für Geschirre, bei dem der Hohlgriff aus einem umlaufenden, gefalzten, sich überlappenden oder stumpf gestoßenen Metallblech besteht und der Hohlgriff mit einer oder mehreren wärmeisolierenden Einlagen versehen ist.

Hohlgriffe der vorstehend genannten Art werden in großem Umfang für Geschirre eingesetzt. Diese Hohlgriffe bestehen aus einem die Außenkontur des Griffes bildenden Metallblech, welches Aussparungen aufweist, in das wärmeisolierende Einlagen aus z. B. Bakelit oder Holz eingesetzt sind. Diese Einlagen haben zum einen die Aufgabe, einen Isolierschutz zu bewirken und zum anderen dienen diese auch dazu, optische Effekte und eine bessere Handhabbarkeit zu erreichen. Der Nachteil dieser bekannten Hohlgriffe besteht darin, daß bei Beschädigung der Einlagen die scharfen Kanten des Metallblechs hervortreten, die in der Regel sogar nicht entgratet sind, so daß beim Gebrauch Schnittverletzungen auftreten können.

Der Erfindung liegt die Aufgabe zugrunde, einen Hohlgriff der eingangs genannten Art so auszubilden, daß zum einen eine sichere Handhabbarkeit auch bei Beschädigung der Einlage des Kohlgriffes gewährleistet ist und daß zum anderen der Griff selbst bei Verlust der Einlage weiter verletzungsfrei verwendet werden kann.

Diese Aufgabe wird erfindungsgemäß dadurch gelöst, daß der Hohlgriff eine oder mehrere Einprägungen aufweist, in welche die wärmeisolierenden Einlagen eingebettet sind.

Die erfindungsgemäßen Hohlgriffe werden nicht mehr, wie dies beim Stand der Technik üblich ist, ausgeschnitten, sondern sie bleiben als kompakte Hohlgriffe erhalten, wobei nur im Bereich der Einlage Einprägungen vorgenommen werden, die die Einlage aufnehmen. Diese Einprägungen erhalten weiche runde Kanten, die auch bei Verlust oder bei einer Teilbeschädigung der Einlage keine Gefahr für die Hände darstellen. Insbesondere sind so Schnittverletzungen zu vermeiden.

Der Vorteil der erfindungsgemäß ausgebildeten Hohlgriffe besteht darin, daß der Hohlgriff in einer sehr kostengünstigen Fertigungsweise herstellbar ist. Des weiteren bleibt der volle Querschnitt des Blechkörpers erhalten, so daß eine sehr hohe Stabilität des Griffes erhalten wird. Es ist hier möglich, bei sogar höherer Stabilität einen geringeren Blechquerschnitt zu wählen. Darüber hinaus ist der Griff in optischer Hinsicht wesentlich gefälliger, da die natürlichen Verformungsrundungen nicht unterbrochen werden. Auch im Bereich der Befestigungslöcher werden runde Kanten erhalten, die bei der Hantierung auch ohne Einlage nicht stören, da diese im Boden der Prägung angeordnet sind.

Mehrere Ausführungsbeispiele der Erfindung sind im folgenden anhand der Zeichnung näher beschrieben, in dieser zeigen:
- Abb. 1: eine Ansicht auf einem erfindungsgemäß ausgebildeten Seitengriff von unten,
- Abb. 2: eine Ansicht entsprechend Abb. 1 mit abgenommener Einlage,
- Abb. 3: eine Seitenansicht der Abb. 1,
- Abb. 4: ein Schnitt nach Linie IV - IV in Abb. 6,
- Abb. 5: ein Schnitt nach Linie V - V in Abb. 1,
- Abb. 6: eine Draufsicht auf einem Griff nach Abb. 1,
- Abb. 7: eine Ansicht auf einen erfindungsgemäß ausgebildeten Stielgriff von unten,
- Abb. 8: eine Seitenansicht des Stielgriffes nach Figur 7,
- Abb. 9: einen Schnitt nach Linie IX - IX in Abb. 8,
- Abb. 10: einen Längsschnitt durch den Griff gemäß Linie X - X in Abb. 11,
- Abb. 11: eine Draufsicht auf den Griff nach Abb. 7,
- Abb. 12: eine Seitenansicht eines Deckelgriffes,
- Abb. 13: den gleichen Griff in um 90°C gedrehter Stellung,
- Abb. 14: eine Draufsicht auf den Deckelgriff nach den Fig. 12 und 13,
- Abb. 15: einen Schnitt nach Linie XV - XV in Abb. 13,
- Abb. 16: einen Schnitt nach Linie XVI - XVI in Abb. 14 und
- Abb. 17: eine Draufsicht auf den mit einer Einprägung versehenen Griff mit weggenommener wärmeisolierender Einlage.

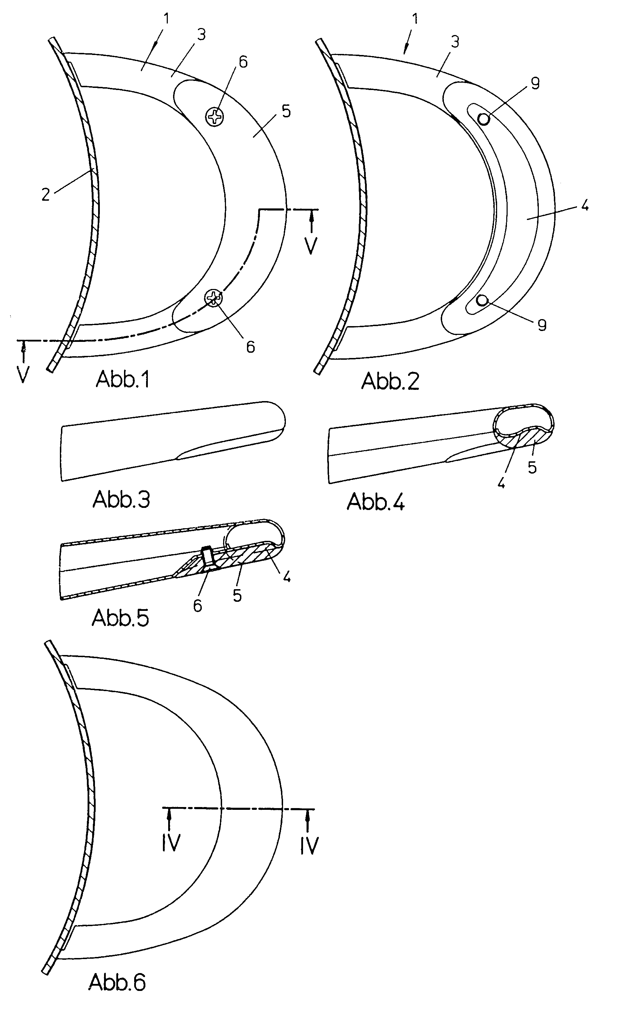

In den Abbildungen 1 bis 6 ist ein erfindungsgemäß ausgebildeter Seitengriff 1 dargestellt, der an einer Geschirrwandung 2 befestigt ist. Die Art der Befestigung ist bekannt, wobei der Seitengriff entweder lösbar oder unlösbar am Geschirr befestigt sein kann. Der Seitengriff kann entweder angeschweißt, angesteckt oder angeschraubt sein. Der Seitengriff 1 besteht, wie dies am besten aus den Abbildungen 4 und 5 ersichtlich ist, aus einem Blech, dessen Enden stumpf aufeinander liegen. Auf der Unterseite 3 des Seitengriffes ist eine Einprägung 4 vorgesehen, die der Form der Einlage 5 entsprechend ausgebildet ist. Die Rundungen der Einlage 5 gehen nahtlos in die Rundungen des Seitengriffes 1 über, so daß die Einlage die ursprüngliche Form des Seitengriffes vor der Einprägung 4 wieder herstellt. Am Boden der Einprägung 4 sind zwei Bohrungen 9 angebracht, die zwei durch die Einlage 5 greifende Befestigungsschrauben 6 aufnehmen.

Die Einlage als solche kann aus jedem beliebigen Material bestehen, vorteilhaft besteht diese aus Kunststoff oder Holz und hat eine gute wärmeisolierende Eigenschaft. Durch die Einprägung des hohlen Seitengriffes wird eine Verformung desselben mit runden Kanten erhalten, so daß auch bei Verlust der Einlage die Handhabbarkeit ohne Verletzungsgefahr gegeben ist.

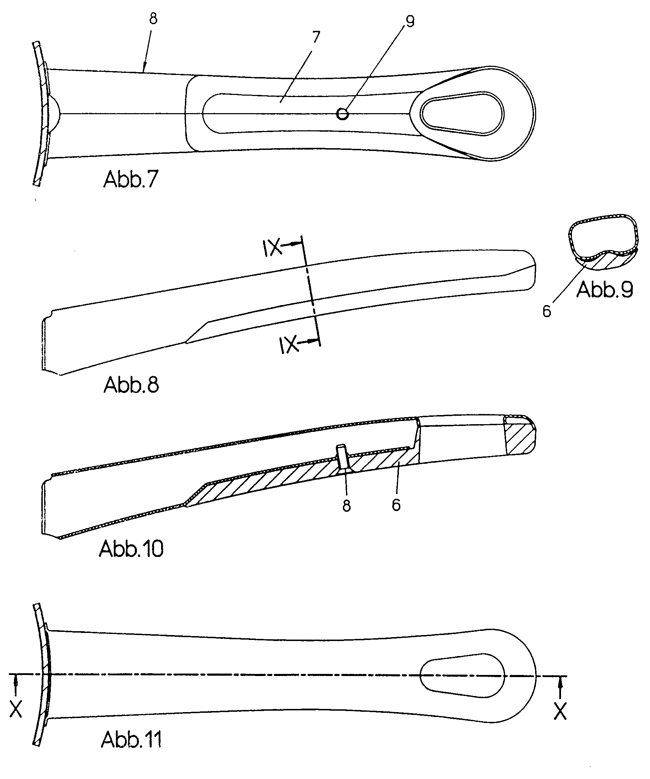

Die Abbildungen 7 bis 11 zeigen einen Stielgriff 8, der mit einer entsprechend ausgebildeten Einlage 5 versehen ist. In diesem Fall ist der Stielgriff an seinem hinteren Ende mit einer Einprägung 7 versehen, die in Abbildung 7 ersichtlich ist. In diese Einprägung ist eine entsprechend ausgebildete Einlage 5 eingesetzt und mittels einer Schraube 6 gehaltert.

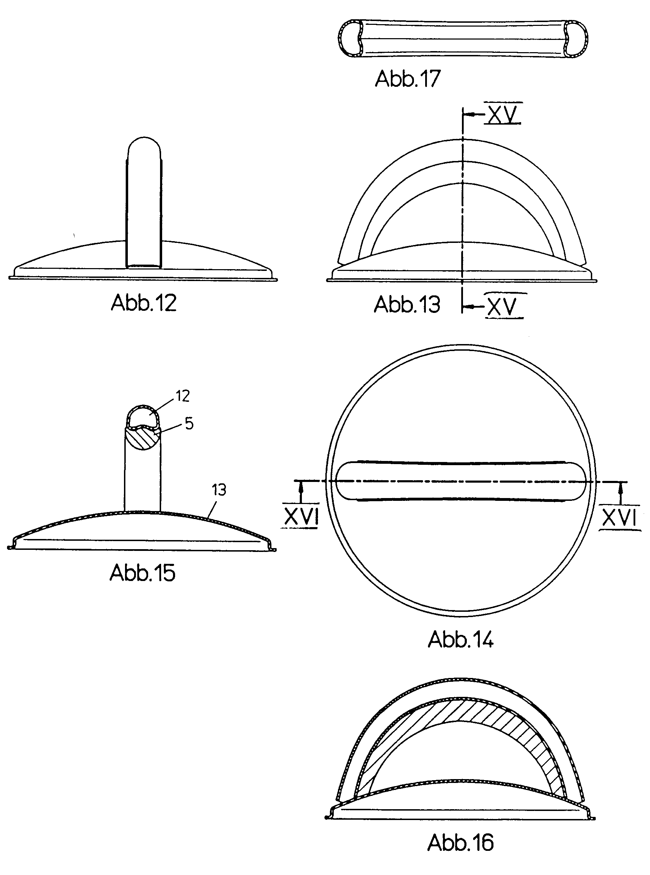

In den Abbildungen 12 - 17 ist ein Deckelgriff gezeigt, der einen Griffteil 12 und einen Fußteil 13 aufweist, wobei der Griffteil 12 auf dem Fußteil 13 angeschweißt ist. Die wärmeisolierende Einlage 5 erstreckt sich über die gesamte Länge des Griffteiles 12 und stützt sich auf dem Fußteil 13 ab, so daß besondere Befestigungselemente für die Einlage 5 entfallen können. Der Griffteil weist eine Einprägung auf, die die Einlage 5 aufnimmt, welche hier größer als die Einprägung ist. Diese Einlage geht übergangslos in die Konturen des Griffteiles über.

## Patentansprüche

1. Hohlgriff aus Metall, wie Seiten-, Stiel-, oder Deckelgriff für Geschirre, bei dem der Hohlgriff aus einem umlaufenden, gefalzten, sich überlappenden oder stumpf gestoßenen Metallblech besteht und der Hohlgriff mit einer oder mehreren wärmeisolierenden Einlagen versehen ist, dadurch gekennzeichnet, daß der Hohlgriff eine oder mehrere Einprägungen aufweist, in welche die wärmeisolierenden Einlagen eingebettet sind.

2. Hohlgriff nach Anspruch 1, dadurch gekennzeichnet, daß die Außenkontur der in die Einprägung eingesetzten wärmeisolierenden Einlage mit der Kontur des nicht verformten Hohlgriffes in etwa übereinstimmt.

3. Hohlgriff nach Anspruch 1 oder 2, dadurch gekennzeichnet, daß die Ränder der Einprägung im Hohlgriff mit gerundeten Kanten ausgebildet sind.

4. Hohlgriff nach einem der Ansprüche 1 bis 3, dadurch gekennzeichnet, daß die Befestigungslöcher für die Einlagen im Boden der Prägung angeordnet sind.
